# EUROPEAN PATENT SPECIFICATION

(11) **EP 4 212 374 B1**
(45) Date of publication and mention of the grant of the patent: **18.09.2024**
(21) Application number: 22152044.8
(22) Date of filing: 18.01.2022
(51) Int. Cl.: B60K 11/04, B60K 11/00

(54) **VEHICLE COOLING MODULE AND VEHICLE**
FAHRZEUGKÜHLUNGSMODUL UND FAHRZEUG
MODULE DE REFROIDISSEMENT DE VÉHICULE ET VÉHICULE

(43) Date of publication of application: 19.07.2023
(73) Proprietor: Scania CV AB, 151 87 Södertälje (SE)
(72) Inventor: KARDOS, Zoltan, 151 35 Södertälje (SE); HALL, Ola, 117 67 Stockholm (SE)
(74) Representative: Scania CV AB

(56) References cited:
- US-A1- 2004 104 007
- US-A1- 2014 251 706
- US-A1- 2021 268 894

## Description

### TECHNICAL FIELD

The present invention relates to a vehicle cooling module configured to cool a fluid of a cooling system of a vehicle. The present invention further relates to a vehicle comprising a cooling system and a cooling module configured to cool a fluid of the cooling system.

### BACKGROUND

Modern vehicles usually comprise several systems and components which require cooling. Road vehicles have traditionally been powered using an internal combustion engine. However, the use of electric drive for vehicles provides many advantages, especially regarding local emissions. Such vehicles comprise one or more electric machines configured to provide motive power to the vehicle. These types of vehicles can be divided into the categories pure electric vehicles and hybrid electric vehicles. Pure electric vehicles, sometimes referred to as battery electric vehicles, only-electric vehicles, and all-electric vehicles, comprise a pure electric powertrain and comprise no internal combustion engine and therefore produce no emissions in the place where they are used.

A hybrid electric vehicle comprises two or more distinct types of power, such as an internal combustion engine and an electric propulsion system. The combination of an internal combustion engine and an electric propulsion system provides advantages with regard to energy efficiency, partly because of the poor energy efficiency of an internal combustion engine at lower power output levels. Moreover, some hybrid electric vehicles are capable of operating in pure electric drive when wanted, such as when driving in certain areas.

The electricity is usually stored in a rechargeable battery of the vehicle and some different types of batteries are used, such as lithium-ion batteries, lithium polymer batteries, and nickel-metal hydride batteries.

As mentioned, the use of electric drive for vehicles provides many advantages, especially regarding local emissions. However, the components needed for obtaining electric propulsion add complexity to the vehicle and can add to the number of components and systems that need cooling. Furthermore, the use of electric drive for vehicles normally lead to packing problems, i.e., difficulties in fitting all the arrangements and components in the vehicle in a suitably manner.

Systems and components of a vehicle are usually cooled using a cooling system comprising a cooling circuit with a coolant pump configured to pump coolant through the coolant circuit and one or more heat exchangers arranged to transfer heat from the cooling circuit to ambient air. A heat exchanger is normally subjected to a varying supply pressure of coolant which can cause movement of the heat exchanger relative to the body of the vehicle.

In many vehicles, the heat exchangers are arranged at a front portion of a vehicle such that a front face of the heat exchanger is subjected to the airflow generated during driving of the vehicle. In such vehicles, the front face of the heat exchanger normally faces in a forward moving direction of the vehicle which can ensure an efficient airflow through the heat exchanger upon movement of the vehicle in the forward moving direction. However, heat exchangers can be mounted at other locations of a vehicle and in other orientations relative to the vehicle. As an example, a heat exchanger may be mounted at a rear region of a vehicle with the front face thereof facing in a direction transverse to the forward moving direction, such that in a lateral direction of the vehicle. Such an arrangement of a heat exchanger is common in busses which normally comprise a propulsion system at the rear region of the vehicle. However, also in such solutions, the front face of the heat exchanger can be subjected to an airflow flowing towards the front face caused by movement of the vehicle due to one or more air vents provided in an outer body of the vehicle and possibly also one or more air ducting arrangements configured to conduct an airflow towards the front face of the heat exchanger.

Moreover, many vehicles comprise one or more fans arranged to blow air through the heat exchangers. In this manner, an airflow through the heat exchangers can be generated also when the vehicle is driving at low speed or is at stand still. Furthermore, heat exchanger assemblies can be provided with a fan shroud enclosing a circumference of a fan. In this manner, the efficiency of the fan can be significantly increased. The fan shroud is normally attached to the heat exchanger, whereas the fan configured to generate an airflow through the heat exchanger is typically mounted to the body of the vehicle.

Moreover, a heat exchanger is normally attached to a body of the vehicle using a number of mounting arrangements. In addition, many vehicles comprise two or more reaction rods which are attached to the body of the vehicle, and which extend into apertures in a mounting assembly of the heat exchanger. Thereby, relative movements between the heat exchanger and the vehicle body, for example caused by a varying supply pressure of coolant, can be counteracted.

A general problem when designing vehicle components and arrangements, such as vehicle cooling arrangements, is space efficiency. That is, modern vehicles comprise numerous arrangements and components which each occupy space inside the vehicle. This can lead to packing problems of the arrangements and components, i.e., difficulties in fitting all the arrangements and components inside the vehicle. Moreover, tightly fitted components and arrangements in a vehicle make service and repair procedures of the vehicle more difficult, costly, and time-consuming.

Furthermore, some general problems when designing vehicle components and arrangements, such as vehicle cooling arrangements, are costs, energy efficiency, and reliability. That is, it is an advantage if the vehicle components and arrangements have conditions and characteristics suitable for being manufactured and assembled in a cost-efficient manner. Moreover, to reduce the total energy consumption of the vehicle, it is an advantage if all components and arrangements of a vehicle can operate in an energy efficient manner.

Heavier types of vehicles, such as trucks and the like, normally comprise two main frame beams extending along a longitudinal direction of the vehicle and a number of cross members connecting the two main frame beams. Moreover, these types of vehicles normally comprise a number of subframes mounted to the two main frame beams, wherein a subframe can support and/or carry one or more arrangements of the vehicle. Wheel suspensions of the vehicle are normally attached to the two main frame beams and during driving of the vehicle, some movement can occur between the two main frame beams and subframes mounted thereto. Such movements can cause tension forces applied to components and arrangements mounted to the two main frame beams and to components and arrangements mounted to a subframe.

Furthermore, it is an advantage if the vehicle components and arrangements are designed to be reliable and preferably last the lifetime of the vehicle. Moreover, it is an advantage if the vehicle components and arrangements are designed such that they can be removed from the vehicle in a simple manner for example when wanting to perform a service or repair procedure of the component/arrangement or of another part, system, or arrangement of the vehicle.

A vehicle cooling module is known from US 2021/268894 A1.

### SUMMARY

It is an object of the present invention to overcome, or at least alleviate, at least some of the above-mentioned problems and drawbacks.

According to a first aspect of the invention, the object is achieved by a vehicle cooling module configured to cool a fluid of a cooling system of a vehicle. The cooling module comprises a first side structure, a second side structure, a heat exchanger attached to the first and second side structures, and a fan assembly comprising at least one fan unit and a fan bracket attaching the at least one fan unit to the first and second side structures. The vehicle cooling module further comprises three mounting arrangements for mounting the cooling module to the vehicle. The three mounting arrangements comprise a first mounting arrangement arranged on the first side structure, a second mounting arrangement arranged on the second side structure, and a third mounting arrangement arranged on the fan assembly.

Since the vehicle cooling module comprises the first and second side structures and the fan bracket attaching the at least one fan unit to the first and second side structures, a vehicle cooling module is provided requiring few assembling steps at a main assembly line for vehicles. That is, many vehicle manufacturers utilize a so-called main assembly line in which components and arrangements are assembled to a chassis of the vehicle to form an operable vehicle. Such an assembly line may also be referred to as a final assembly line. These assembly lines are divided into several assembly stations, wherein some particular components and arrangements are assembled to the vehicle at each assembly station. Moreover, a limited amount of time is available at each assembly station.

Since the vehicle cooling module comprises the first and second side structures and the fan bracket attaching the at least one fan unit to the first and second side structures, the vehicle cooling module can be preassembled before being transported to the assembly station at the main assembly line. This saves time at the assembly station as compared to prior art cooling arrangements in which a heat exchanger is mounted to the vehicle in several mounting arrangements and in which a fan unit is mounted to the body of the vehicle. Such a mounting procedure may also require precision alignment of the fan unit relative to the heat exchanger at the main assembly line which can be time consuming. However, due to the features of the vehicle cooling module according to the embodiments herein, such a precision alignment can instead be performed during the preassembly of the vehicle cooling module before the vehicle cooling module is transported to the main assembly line. Thus, due to the features of the vehicle cooling module according to the embodiments herein, a vehicle cooling module is provided having conditions and characteristics suitable for being assembled to a vehicle in a quick, simple, and cost-efficient manner.

Moreover, due to the three mounting arrangements for mounting the cooling module to the vehicle, a vehicle cooling module is provided having conditions for being mounted to a vehicle in a reliable and secure manner while only requiring few assembling steps. Furthermore, a vehicle cooling module is provided having conditions for being mounted to a vehicle without using more than the three mounting arrangements for fixating the vehicle cooling module to the vehicle. In other words, due to the features of the vehicle cooling module, the use of one or more reaction rods is circumvented. This is because the three mounting arrangements can ensure that the vehicle cooling module is held relative to the vehicle in an efficient manner where movement of the vehicle cooling module relative to the vehicle can be counteracted in all spatial directions by the three mounting arrangements. Furthermore, due to the three mounting arrangements for mounting the cooling module to the vehicle, a vehicle cooling module is provided having conditions for being subjected to lower tension forces as compared to vehicle cooling modules being mounted to a vehicle using more than three mounting arrangements.

In addition, due to the features of the vehicle cooling module according to the embodiments herein, a vehicle cooling module is provided having conditions and characteristics suitable for being disassembled from the vehicle in a quick and simple manner for example when wanting to perform a service or repair procedure of the vehicle cooling module or of another part, system, or arrangement of the vehicle.

Moreover, a vehicle cooling module is provided having conditions for alleviating packing problems in vehicles. This is because the vehicle cooling module comprises the fan assembly and thus circumvents the need for a fan assembly mounted to the body of the vehicle.

Furthermore, due to the fan bracket attaching the at least one fan unit to the first and second side structures, the three mounting arrangements, and the fact that the fan assembly is utilized for mounting the vehicle cooling module to the vehicle, a vehicle cooling module is provided having conditions for being compact and light weighted. In this manner, a vehicle cooling module can be provided which require little space inside the vehicle, which can alleviate packing problems and provide space for other arrangements and components of the vehicle. Moreover, a compact vehicle cooling module can facilitate service and repair procedures of the vehicle. In addition, a vehicle cooling module having a low weight is advantageous regarding the total energy consumption of a vehicle comprising the vehicle cooling module.

Accordingly, a vehicle cooling module is provided overcoming, or at least alleviating, at least some of the above-mentioned problems and drawbacks. As a result, the above-mentioned object is achieved.

Optionally, the heat exchanger comprises a front face configured to be subjected to an airflow flowing towards the front face during operation of the cooling module and a rear face being opposite to the front face, and wherein the fan assembly is arranged at the rear face of the heat exchanger. Thereby, an efficient airflow towards the front face of the heat exchanger can be ensured. In addition, since the third mounting arrangement is arranged on the fan assembly, it can be ensured that the vehicle cooling module is held relative to the vehicle in an efficient and reliable manner while not disturbing the airflow towards the front face of the heat exchanger. Moreover, the assembly and the disassembly of the vehicle cooling module to and from the vehicle can be further facilitated.

Optionally, the fan bracket comprises a number of apertures allowing an airflow therethrough. Thereby, conditions are provided for a large sized and rigid fan bracket having a low impact on the airflow through the heat exchanger

Optionally, the third mounting arrangement is arranged on the fan bracket. Thereby, a vehicle cooling module is provided having conditions for being durable, low weighted, and compact. This is because the fan bracket is utilized for structurally supporting several components relative to the vehicle, including the first and second side structures, the heat exchanger, and the at least one fan unit.

Optionally, each fan unit of the fan assembly comprises a fan, and wherein the fan assembly comprises a fan shroud enclosing at least a portion of a circumference of each fan of the fan assembly. Since the fan assembly comprises a fan shroud enclosing at least a portion of a circumference of each fan of the fan assembly, a low tolerance chain is provided between each fan and the respective fan shroud. In this manner, the fan assembly can be designed to have a small distance between each fan and the respective fan shroud without risking an impact between the fan and the fan shroud. A small distance between each fan and the respective fan shroud provides conditions for operating the fan in an energy efficient manner due to a low amount of recirculation of air around edges of the fan.

Furthermore, since the fan assembly comprises a fan shroud enclosing at least a portion of a circumference of each fan of the fan assembly, a more self-contained vehicle cooling module is provided having conditions for requiring even fewer mounting steps at an assembly station of a main assembly line of vehicles. This is because the fan shroud can be mounted to the vehicle cooling module before the vehicle cooling module is transported to the assembly station.

Optionally, each fan unit of the fan assembly comprises a fan and a fan motor configured to rotate the fan. Thereby, a furthermore self-contained vehicle cooling module is provided having conditions for requiring few mounting steps at a main assembly line of vehicles. This is because the fan motor of each fan unit of the fan assembly can be mounted to the vehicle cooling module before the vehicle cooling module is transported to an assembly station of a main assembly line of vehicles.

Optionally, the fan motor may be an electric fan motor. According to some embodiments, the fan motor may be a high voltage fan motor configured to be supplied with an electric voltage higher than 24 volts, such as 400 volts or above.

Optionally, the fan bracket comprises a number of motor apertures, and wherein each fan motor of the fan assembly is arranged in one motor aperture of the number of the motor apertures. Thereby, each fan motor can be attached to the fan bracket in a quick, simple, secure, and compact manner. Furthermore, the number of motor apertures can ensure that each fan is mounted at a predetermined position relative to other components of the vehicle cooling module, such as the heat exchanger, a fan shroud, and the like, in a quick and simple manner.

Optionally, the fan assembly comprises one fan unit only. Thereby, a high flowrate of air can be provided through the heat exchanger in an energy efficient manner. Moreover, a simpler and less costly vehicle cooling module can be provided as compared to solutions utilizing several smaller fans. In addition, a fan assembly is provided having conditions for generating less noise due to a lower rotational speed for a given flowrate of air as compared to solutions utilizing several smaller fans.

Furthermore, since the fan assembly of the cooling module comprises one fan unit only, a more modular cooling module is provided having conditions for being arranged in several different types of vehicles having different cooling and air flow demands with none or only minor adaptions of the cooling module for the different types of vehicles. This is because, as compared to using several fan units, the single fan unit can in a simple and cost-efficient manner be adapted to provide different air flow rates through the heat exchanger of the cooling module for example by varying one or more of the control of the fan motor, the size of the fan motor, the type of the fan motor, the supply voltage to the fan motor, the size of the fan of the fan unit, the number of fan blades of the fan, the inclination angles of fan blades of the fan, or the like.

Optionally, a vertical extension of each of the first and second side structures is at least 50%, or is at least 70%, of a vertical extension of the heat exchanger. Thereby, the heat exchanger can be held relative to the vehicle in an efficient and secure manner while using few mounting arrangements for attaching the vehicle cooling module to the vehicle.

Optionally, the fan bracket comprises a first mounting portion mounted to the first side structure and a second mounting portion mounted to the second side structure, and wherein a vertical extension of each of the first and second mounting portions is at least 35%, or is at least 50%, of a vertical extension of the heat exchanger. Thereby, a secure and efficient attachment can be provided between the fan bracket and the first and second side structures. As a further result, a secure and efficient attachment of the heat exchanger relative to a vehicle comprising the vehicle cooling module can be provided while using few mounting arrangements for attaching the vehicle cooling module to the vehicle. Furthermore, a short tolerance chain can be provided between a fan and a fan shroud of the vehicle cooling module which thus provides conditions for a small distance between the fan and the fan shroud.

Optionally, the first and second mounting arrangements are arranged above a vertical centre of the cooling module. Thereby, the heat exchanger can be held relative to the vehicle in an efficient and secure manner while using few mounting arrangements for attaching the vehicle cooling module to the vehicle.

Optionally, the third mounting arrangement is arranged below a vertical centre of the cooling module. Thereby, the heat exchanger can be held relative to the vehicle in an efficient and secure manner while using few mounting arrangements for attaching the vehicle cooling module to the vehicle. This is because movement of the vehicle cooling module relative to the vehicle can be counteracted in all spatial directions in an efficient manner by the three mounting arrangements. Moreover, due to these features, a vehicle cooling module is provided having conditions for low tension forces between the three mounting arrangements and thus low tension forces transferred to the vehicle cooling module.

Optionally, the third mounting arrangement is arranged at a lateral centre of the cooling module. Thereby, the heat exchanger can be held relative to the vehicle in an efficient and secure manner while using few mounting arrangements for attaching the vehicle cooling module to the vehicle. This is because movement of the vehicle cooling module relative to the vehicle can be counteracted in all spatial directions in an efficient manner by the three mounting arrangements. Moreover, due to these features, a vehicle cooling module is provided having conditions for low tension forces between the three mounting arrangements and thus low tension forces transferred to the vehicle cooling module.

Optionally, the heat exchanger comprises a front face configured to be subjected to an airflow during operation of the cooling module, and wherein the three mounting arrangements are positioned such that a centre of mass of the cooling module is located between the three mounting arrangements as seen in a direction perpendicular to the front face of the heat exchanger. Thereby, the heat exchanger can be held relative to the vehicle in an efficient and secure manner while using few mounting arrangements for attaching the vehicle cooling module to the vehicle. This is because movement of the vehicle cooling module relative to the vehicle can be counteracted in all spatial directions in an efficient manner by the three mounting arrangements. Moreover, due to these features, a vehicle cooling module is provided having conditions for low tension forces between the three mounting arrangements and thus low tension forces transferred to the vehicle cooling module.

Optionally, each of the three mounting arrangements comprises a resilient bushing. Thereby, the heat exchanger can be held relative to the vehicle in an efficient and secure manner while some movement is allowed of the vehicle cooling module relative to the vehicle. Moreover, due to these features, a vehicle cooling module is provided having conditions for low tension forces between the three mounting arrangements and thus low tension forces transferred to the vehicle cooling module.

According to a second aspect of the invention, the object is achieved by a vehicle comprising a cooling system and a vehicle cooling module according to any one of the preceding claims, wherein the vehicle cooling module is configured to cool a fluid of the cooling system of the vehicle. Since the vehicle comprises a vehicle cooling module according to some embodiments, a vehicle is provided overcoming, or at least alleviating, at least some of the above-mentioned problems and drawbacks. As a result, the above-mentioned object is achieved.

Optionally, the vehicle comprises two main frame beams and a cross member connecting the two main frame beams, and wherein the third mounting arrangement of the cooling module is mounted to the cross member. Thereby, a vehicle is provided comprising a secure, efficient, and compact attachment of the vehicle cooling module. Furthermore, a vehicle is provided having conditions for a low transfer of movement and tension forces from the two main frame beams to the vehicle cooling module.

Optionally, the vehicle comprises two main frame beams and a subframe mounted to the two main frame beams, and wherein each of the first and second mounting arrangements is mounted to the subframe. Thereby, a vehicle is provided comprising a secure, efficient, and compact attachment of the vehicle cooling module. Moreover, a vehicle is provided in which turning movements between the two main frame beams causes low tension forces between the three mounting arrangements and thus low tension forces transferred to the vehicle cooling module.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates a vehicle according to some embodiments,
Fig. 2 illustrate an isometric view of a cooling module of the vehicle illustrated in Fig. 1,
Fig. 3 illustrate the cooling module illustrated in Fig. 2 in a disassembled state,
Fig. 4 illustrates a rear view of the cooling module according to the embodiments illustrated in Fig. 2 and Fig. 3,
Fig. 5 illustrates a front view of the cooling module according to the embodiments illustrated in Fig. 2 - Fig. 4, and
Fig. 6 illustrates a side view of the cooling module according to the embodiments illustrated in Fig. 1 - Fig. 5.

### DETAILED DESCRIPTION

Aspects of the present invention will now be described more fully. Like numbers refer to like elements throughout. Well-known functions or constructions will not necessarily be described in detail for brevity and/or clarity.

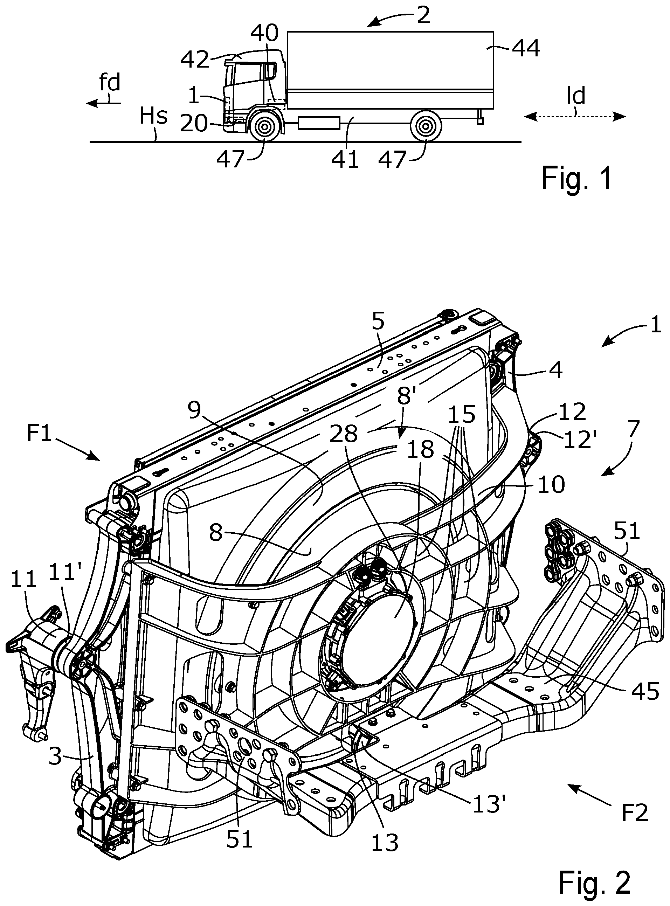

**Fig. 1** schematically illustrates a vehicle 2 according to some embodiments of the present disclosure. According to the illustrated embodiments, the vehicle 2 is a truck, i.e., a type of heavy vehicle. However, according to further embodiments, the vehicle 2, as referred to herein, may be another type of heavy or lighter type of manned or unmanned vehicle for land-based propulsion such as a lorry, a bus, a construction vehicle, a tractor, a car, or the like.

The vehicle 2 comprises a powertrain 40. According to the illustrated embodiments, the powertrain 40 is configured to provide motive power to the vehicle 2 via a number of wheels 47 of the vehicle 2. Furthermore, according to the illustrated embodiments, the powertrain 40 is a pure electric powertrain, i.e., a powertrain comprising a number of electrical machines for providing motive power to the vehicle 2 and no internal combustion engine for providing motive power to the vehicle 2. Moreover, the vehicle 2 comprises at least one propulsion battery configured to provide electricity to the number of electrical machines of the powertrain 40 of the vehicle 2. Thus, according to the illustrated embodiments, the vehicle 2 is a pure electric vehicle.

However, according to further embodiments, the powertrain 40 of the vehicle 2 as referred to herein may comprise an internal combustion engine in addition to the number of electrical machines, or as an alternative to the number of electrical machines, for providing motive power to the vehicle 2. In other words, the powertrain 40 of the vehicle 2 may be a so-called hybrid electric powertrain comprising a combustion engine in addition to one or more electric propulsion motors for providing motive power to the vehicle 2. Likewise, the vehicle 2 may comprise solely an internal combustion engine for providing motive power to the vehicle 2.

In Fig. 1, the vehicle 2 is illustrated as positioned in an intended upright use position on a flat horizontal surface Hs. As can be seen in Fig. 1, the wheels 47 of the vehicle 2 are abutting the flat horizontal surface Hs when the vehicle 2 is positioned in the intended upright use position on the flat horizontal surface Hs. The vehicle 2 has a longitudinal direction Id. The longitudinal direction Id of the vehicle 2 is parallel to the flat horizontal surface Hs when the vehicle 2 is positioned in the intended upright use position thereon. Moreover, the longitudinal direction Id of the vehicle 2 is parallel to a forward moving direction fd of the vehicle 2 as well as to a reverse moving direction of the vehicle 2.

According to the illustrated embodiments, the vehicle 2 comprises two main frame beams 41. Each of the two main frame beams 41 are elongated with a direction of elongation being substantially parallel to the longitudinal direction Id of the vehicle 2. Moreover, according to the illustrated embodiments, the two main frame beams 41 are configured to support components and structures of the vehicle 2 relative to the wheels 47 of the vehicle 2, such as a cabin 42, a cargo compartment 44, and the like. Each of the two main frame beams 41 may also be referred to as a main chassis beam 41.

The vehicle 2 comprises a cooling system 20. According to the illustrated embodiments, the cooling system 20 is configured to cool the powertrain 40 of the vehicle 2. Moreover, the vehicle 2 comprises a vehicle cooling module 1. The vehicle cooling module 1 is configured to cool a fluid of the cooling system 20 of the vehicle 2, as is further explained herein. The vehicle cooling module 1 is in some places herein referred to as "the cooling module 1" for reasons of brevity and clarity.

**Fig. 2** illustrate an isometric view of the cooling module 1 of the vehicle 2 illustrated in Fig. 1. Moreover, in Fig. 2, a cross member 45 of the vehicle 2 can be seen. In Fig. 2, the cooling module 1 is illustrated in an assembled state. Below, simultaneous reference is made to Fig. 1 and Fig. 2, if not indicated otherwise.

The cross member 45 is connecting the two main frame beams 41 of the vehicle 2. In more detail, the cross member 45 comprises two attachment sections 51 each configured to be attached to a main frame beam 41 of the two main frame beams 41 of the vehicle 2. An attachment section 51 of the cross member 45 may for example be attached to a main frame beam 41 using a number of fastening elements and/or by welding. The cross member 45 is a structural component configured to add structural rigidity to the frame/chassis of the vehicle 2 comprising the cross member 45. The vehicle 2 may comprise a number of cross members distributed along the longitudinal direction Id of the vehicle 2.

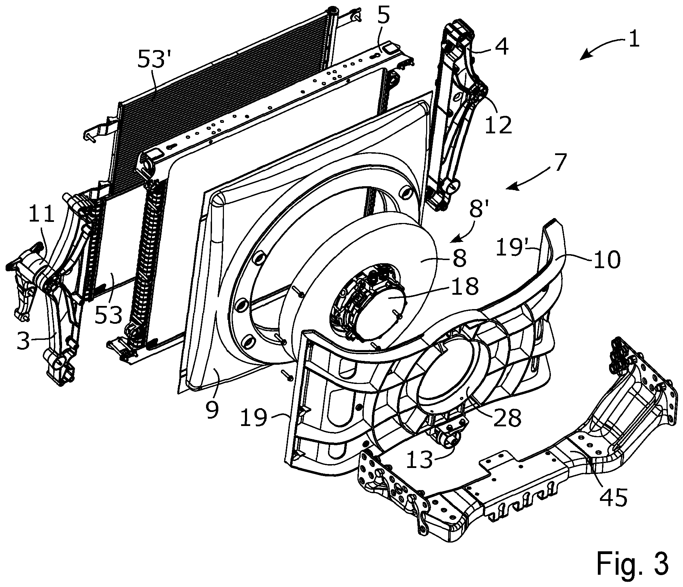

**Fig. 3** illustrate the cooling module 1 illustrated in Fig. 2 in a disassembled state. Moreover, like in Fig. 2, the cross beam 45 is visible in Fig. 3. Below, simultaneous reference is made to Fig. 1 - Fig. 3, if not indicated otherwise. The cooling module 1 comprises a first side structure 3 and a second side structure 4. According to the illustrated embodiments, each of the first and second side structures 3, 4 has a bracket-like shape and may according to these embodiments also be referred to as a first and a second side bracket. However, according to further embodiments, one or both of the first and second side brackets 3, 4 may be of another type and may for example comprise a tank for accommodating a cooling fluid, or the like.

The cooling module 1 further comprises a heat exchanger 5. The heat exchanger 5 is attached to the first and second side structures 3, 4. The heat exchanger 5 may for example be attached to the first and second side structures 3, 4 using a number of fastening elements.

According to the illustrated embodiments, the heat exchanger 5 of the cooling module 1 is configured to cool a fluid in the form of a liquid coolant of the cooling system 20 of the vehicle 2. The heat exchanger 5 is configured to transfer heat from the liquid coolant to the surroundings. Therefore, according to the illustrated embodiments, the heat exchanger 5 may also be referred to as a radiator. Purely as an example, the heat exchanger 5 may be configured to transfer heat to the surroundings, wherein the heat is generated by one or more of an electric motor, an inverter, power electronics, other electronics, a gearbox, a retarder, an internal combustion engine, or the like, of a vehicle 2 comprising the cooling module 1.

As is best seen in Fig. 3, according to the illustrated embodiments, the cooling module 1 comprises three heat exchangers 5, 53, 53'. Therefore, the heat exchanger 5, referred to above, may also be referred to as a first heat exchanger, and the other heat exchangers 53, 53' may be referred to as a second heat exchanger 53 and a third heat exchanger 53'.

According to the illustrated embodiments, the second heat exchanger 53 is a low temperature heat exchanger configured to cool a liquid coolant of a second cooling system of the vehicle 2 comprising the cooling module 1. The second cooling system of the vehicle 2 may be configured to cool a propulsion battery of the vehicle 2. The second heat exchanger 53 is configured to transfer heat from a liquid coolant of the second cooling system to the surroundings. Therefore, according to the illustrated embodiments, the second heat exchanger 53 may also be referred to as a second radiator.

Moreover, according to the illustrated embodiments, the third heat exchanger 53' is a condenser unit configured to cool a fluid of a heat pump circuit of the vehicle 2 comprising the cooling module 1. The third heat exchanger 53' is thus configured to dissipate heat from the fluid of the heat pump circuit to the surroundings. The fluid of the heat pump circuit may be a refrigerant, possibly a supercritical fluid. The heat pump circuit of the vehicle 2 may for example be used to cool a cabin 42 and/or a cargo compartment 44 of the vehicle 2.

According to the illustrated embodiments, each of the second and third heat exchangers 53, 53' is attached to the first and second side structures 3, 4. The second and third heat exchangers 53, 53' may for example be attached to the first and second side structures 3, 4 using a number of fastening elements.

According to the illustrated embodiments, the cooling module 1 may comprise another number of heat exchangers 5, 53, 53' than three, such as one, two, four, or five. Each of such heat exchangers may be of one of the herein mentioned types and may be configured to cool a fluid of a cooling system of one of the herein mentioned types.

The cooling module 1 further comprises fan assembly 7. The fan assembly 7 comprises a fan unit 8' comprising a fan 8 and a fan motor 18 configured to rotate the fan 8. According to the illustrated embodiments, the fan motor 18 is an electric fan motor. However, according to further embodiments, the fan motor 18 may be of hydraulic type, i.e., a hydraulic fan motor. In Fig. 2 and Fig. 3, the fan 8 is illustrated in simplified form as a disc-shaped object. However, the fan 8 comprises a number of fan blades and a centre hub, wherein the fan blades are connected to the centre hub of the fan 8.

The fan assembly 7 further comprises a fan bracket 10. The fan bracket 10 attaches the fan unit 8' to the first and second side structures 3, 4. The fan bracket 10 is thus a structural component which holds the fan unit 8' relative to the first and second side structures 3, 4 and thereby also relative to the heat exchanger 5 of the cooling module 1.

In more detail, according to the illustrated embodiments, the fan bracket 10 comprises a motor aperture 28, wherein the fan motor 18 of the fan assembly 7 is arranged in the motor aperture 28 of the fan bracket 10. As seen in the figures, according to the illustrated embodiments, the fan assembly 7 comprises one fan unit 8' only, i.e., one fan 8 only with an associated fan motor 18. Thereby, a high flowrate of air can be provided through the heat exchanger 5 in an energy efficient manner. Moreover, a simpler and less costly vehicle cooling module 1 can be provided as compared to solutions utilizing several smaller fans. In addition, a fan assembly 7 is provided having conditions for generating less noise as compared to solutions utilizing several smaller fans due to a lower rotational speed for a given flowrate of air.

Furthermore, since the fan assembly 7 of the cooling module 1 comprises one fan unit 8' only, a more modular cooling module 1 is provided having conditions for being arranged in several different types of vehicles having different cooling and air flow demands with none or only minor adaptions of the cooling module 1 for the different types of vehicles. This is because, as compared to using several fan units, the single fan unit 8' can in a simple and cost-efficient manner be adapted to provide different air flow rates through the heat exchanger 5 of the cooling module 1 for example by varying one or more of the control of the fan motor 18, the size of the fan motor 18, the type of the fan motor 18, the supply voltage to the fan motor 18, the size of the fan 8 of the fan unit 8', the number of fan blades of the fan 8 of the fan unit 8', the inclination angles of fan blades of the fan 8 of the fan unit 8', or the like.

According to the illustrated embodiments, the fan motor 18 of the fan unit 8' is a high voltage electric fan motor configured to be supplied with a voltage higher than 24 volts, such as a voltage of 400 volts or above. By using a high voltage electric fan motor, the size of electric cables and electric contacts of the fan motor 18 can be reduced as compared to when using a low voltage fan motor configured to be supplied with a voltage within the range of 12 -24 volts. Moreover, a powerful fan motor 18 can be provided having conditions for operating at high power levels without requiring high supply currents. However, according to some embodiments, the fan assembly 7 may comprise a low voltage fan motor.

Moreover, according to further embodiments of the present disclosure, the fan assembly 7 of the cooling module 1 may comprise another number of fan units, such as two, three, four, or the like. According to such embodiments, the fan bracket 10 may comprise the same number of motor apertures 28 as the number of fan units, wherein each fan motor of the fan assembly 7 is arranged in one motor aperture 28 of the number of the motor apertures 28.

The fan assembly 7 comprises a fan shroud 9 enclosing at least a portion of a circumference of the fan 8 of the fan assembly 7. According to the illustrated embodiments, the fan shroud 9 encloses the entire circumference of the fan 8 of the fan assembly 7. According to the illustrated embodiments, the fan bracket 10 and the fan shroud 9 are separate components wherein the fan shroud 9 is mounted to the fan bracket 10 using a number of fastening elements. However, according to further embodiments, the fan shroud 9 and the fan bracket 10 may be formed as one part, i.e. may be formed by one piece of continuous material. Since the fan shroud 9 is mounted to the fan bracket 10, or form part thereof, a short tolerance chain is provided between the fan 8 of the fan unit 8' and the fan shroud 9. In this manner, conditions are provided for a small distance between radially outer portions of the fan 8 of the fan unit 8' and the fan shroud 9. A small distance between radially outer portions of the fan 8 of the fan unit 8' and the fan shroud 9 provides conditions for operating the fan unit 8' in an energy efficient manner due to a low amount of recirculation of air around edges of the fan 8. The cooling module 1 may comprise a sealing between the fan shroud 9 and the heat exchanger 5. However, according to some embodiments, the cooling module 1 lacks a sealing between the fan shroud 9 and the heat exchanger 5.

According to further embodiments in which the fan assembly 7 comprises two or more fan units 8', the fan assembly 7 may comprise a fan shroud 9 enclosing at least a portion of a circumference of each fan 8 of the fan assembly 7.

The cooling module 1 comprises three mounting arrangements 11, 12, 13 for mounting the cooling module 1 to the vehicle 2. The three mounting arrangements 11, 12, 13 comprises a first mounting arrangement 11 arranged on the first side structure 3, a second mounting arrangement 12 arranged on the second side structure 4, and a third mounting arrangement 13 arranged on the fan assembly 7.

Due to these features, a cooling module 1 is provided which can be preassembled into the state illustrated in Fig. 2 before being transported to an assembly station at a main assembly line of vehicles, as is further explained herein. Moreover, due to the low number of mounting arrangements 11, 12, 13, the cooling module 1 can be mounted to the vehicle 2 at an assembly station in a quick and simple manner.

As is illustrated in Fig. 2, the heat exchanger 5 comprises a front face F1. The front face F1 of the heat exchanger 5 is configured to be subjected to an airflow flowing towards the front face F1 during operation of the cooling module 1. As can be seen when comparing Fig. 1 and Fig. 2, according to the illustrated embodiments, the front face F1 of the heat exchanger 5 is configured to face in a direction substantially coinciding with a forward moving direction fd of the vehicle 2. Moreover, according to the illustrated embodiments, the cooling module 1 is mounted at a front section of the vehicle 2. In other words, the cooling module 1 according to the illustrated embodiments is configured to be mounted at a front section of a vehicle 2 comprising the cooling module 1. In this manner, the front face F1 of the heat exchanger 5 is subjected to an airflow flowing towards the front face F1 during movement of the vehicle 2 in the forward moving direction fd.

However, according to further embodiments, the cooling module 1 may be configured to be mounted at another position and orientation relative to a vehicle 2. As an example, the cooling module 1 may be mounted to the vehicle 2 such that the front face F1 of the heat exchanger 5 faces in a direction transverse to the longitudinal direction Id of the vehicle 2. According to some embodiments, the cooling module 1 may be mounted to the vehicle 2 such that the front face F1 of the heat exchanger 5 faces in a direction substantially parallel to a lateral direction of the vehicle 2, i.e., in a direction substantially perpendicular to the longitudinal direction Id of the vehicle 2.

The heat exchanger 5 of the cooling module 1 further comprises a rear face F2 being opposite to the front face F1. As understood from the above described, according to the illustrated embodiments, the rear face F2 of the heat exchanger 5 faces in a direction substantially coinciding with a reverse moving direction of the vehicle 2.

As is best seen in Fig. 2, according to the illustrated embodiments, the fan assembly 7 is arranged at the rear face F2 of the heat exchanger 5. Moreover, as can be seen in Fig. 2 and Fig. 3, according to the illustrated embodiments, the third mounting arrangement 13 is arranged on the fan bracket 10, which provides several advantages as is further explained herein.

As is indicated in Fig. 2, according to the illustrated embodiments, each of the three mounting arrangements 11, 12, 13 comprises a resilient bushing 11', 12', 13'. The resilient bushings 11', 12', 13' can lower the transfer of shock and vibrations from the vehicle 2 to the cooling module 1. Moreover, the resilient bushings 11', 12', 13' can lower tension forces applied to the cooling module 1.

The fan unit 8' of the cooling module 1 is configured to generate an airflow flowing towards the front face F1 of the heat exchanger 5 during operation. Since the fan assembly 7 is arranged at the rear face F2 of the heat exchanger 5, the fan 8 of the fan unit 8' is configured to generate an airflow flowing towards the front face F1 by sucking air from the front face F1, through the heat exchanger 5, and to the rear face F2 of the heat exchanger 5. As is indicated in Fig. 2 and Fig. 3, the fan bracket 10 comprises a number of apertures 15 allowing an airflow therethrough.

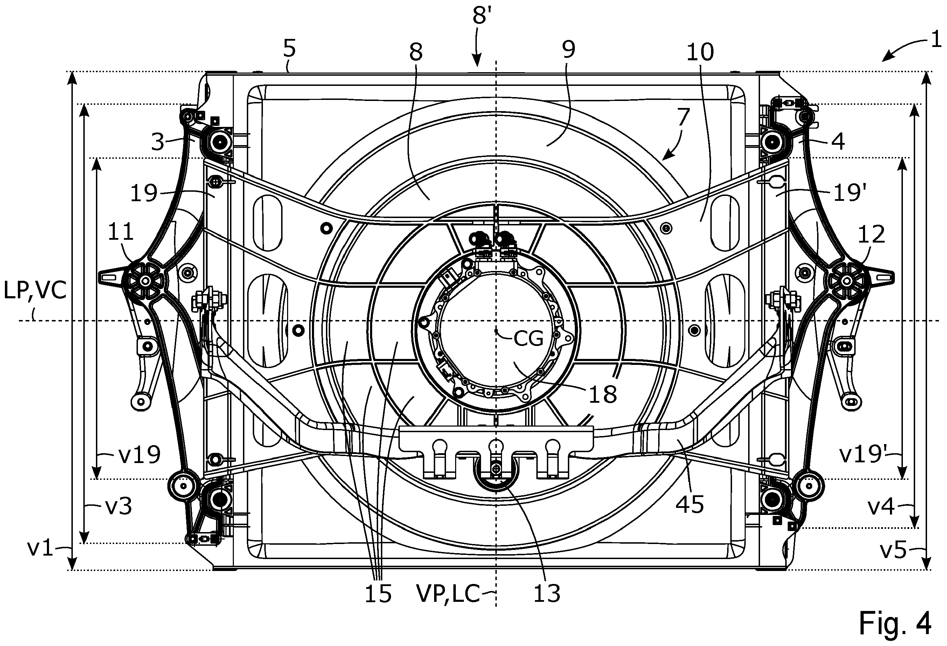

**Fig. 4** illustrates a rear view of the cooling module 1 according to the embodiments illustrated in Fig. 2 and Fig. 3. In Fig. 4, the cooling module 1 is illustrated as seen straight towards the rear face F2 of the heat exchanger 5 of the cooling module 1 indicated in Fig. 2. Below, simultaneous reference is made to Fig. 1 - Fig. 4, if not indicated otherwise.

As seen in Fig. 2 - Fig. 4, the fan bracket 10 according to the illustrated embodiments is large sized and form a console like structure. In Fig. 4, a vertical extension v1 of the cooling module 1 and a vertical extension v5 of the heat exchanger 5 of the cooling module 1 are indicated. As seen in Fig. 4, according to the illustrated embodiments, the vertical extension v5 of the heat exchanger 5 substantially corresponds to the vertical extension v1 of the cooling module 1. In other words, according to the illustrated embodiments, the heat exchanger 5 has substantially the same vertical height as the cooling module 1.

Moreover, in Fig. 4, a vertical extension v3, v4 of each of the first and second side structures 3, 4 is indicated. According to the illustrated embodiments, the vertical extension v3 of the first side structure 3 is approximately 88% of the vertical extension v5 of the heat exchanger 5. Moreover, according to the illustrated embodiments, the vertical extension v4 of the second side structure 4 is approximately 85% of the vertical extension v5 of the heat exchanger 5. According to further embodiments, a vertical extension v3, v4 of each of the first and second side structures 3, 4 may be at least 50%, or may be at least 70%, of a vertical extension v5 of the heat exchanger 5. Thereby, the heat exchanger 5 can be held relative to the vehicle 2 in an efficient and secure manner while using few mounting arrangements 11, 12, 13 for attaching the vehicle cooling module 1 to the vehicle 2, as is further explained herein.

As is indicated in Fig. 3 and Fig. 4, the fan bracket 10 comprises a first mounting portion 19 mounted to the first side structure 3 and a second mounting portion 19' mounted to the second side structure 4. According to the illustrated embodiments, a vertical extension v19, v19' of each of the first and second mounting portions 19, 19' is approximately 65% of a vertical extension v5 of the heat exchanger 5. According to further embodiments, a vertical extension v19, v19' of each of the first and second mounting portions 19, 19' may be at least 35%, or may be at least 50%, of a vertical extension v5 of the heat exchanger 5. Thereby, a secure and efficient attachment can be provided between the fan bracket 10 and the first and second side structures 3, 4. As a further result, a secure and efficient attachment of the heat exchanger 5 relative to a vehicle 2 comprising the vehicle cooling module 1 can be provided while using few mounting arrangements 11, 12, 13 for attaching the vehicle cooling module 1 to the vehicle 2. Furthermore, a short tolerance chain can be provided between a fan 8 and a fan shroud 9 of the vehicle cooling module 1 which thus provides conditions for a small distance between the fan 8 and the fan shroud 9.

In Fig. 4, a lateral longitudinal plane LP of the cooling module 1 is indicated. The lateral longitudinal plane LP is substantially parallel to a flat horizontal support surface Hs when a vehicle 2 comprising the cooling module 1 is positioned in an upright use position on the flat horizontal support surface Hs. The lateral longitudinal plane LP is substantially parallel to the longitudinal direction Id of the vehicle 2 comprising the cooling module 1 as well as substantially parallel to lateral directions of the vehicle 2 comprising the cooling module 1, hence the term lateral longitudinal plane LP.

Moreover, in Fig. 4, a vertical longitudinal plane VP of the cooling module 1 is indicated. The vertical longitudinal plane VP is substantially perpendicular to a flat horizontal support surface Hs when a vehicle 2 comprising the cooling module 1 is positioned in an upright use position on the flat horizontal support surface Hs. The vertical longitudinal plane VP is substantially parallel to the longitudinal direction Id of the vehicle 2 comprising the cooling module 1 as well as substantially parallel to vertical directions of the vehicle 2 comprising the cooling module 1, hence the term vertical longitudinal plane VP.

As understood from the above described, the angle between the vertical longitudinal plane VP and the lateral longitudinal plane LP is 90 degrees. The vertical extensions v1, v2, v3, v4, v19, v19' as referred to herein, may each be measured in a direction parallel to the vertical longitudinal plane VP.

In Fig. 4, a vertical centre VC of the cooling module 1 is indicated. The vertical centre VC of the cooling module 1 is a portion of the cooling module 1 located at equal distances to vertical outer edges of the cooling module 1. Likewise, in Fig. 4, a lateral centre LC of the cooling module 1 is indicated. As above, the lateral centre LC of the cooling module 1 is a portion of the cooling module 1 located at equal distances to lateral outer edges of the cooling module 1.

As can be seen in Fig. 4, the lateral longitudinal plane LP of the cooling module 1 coincides with the vertical centre VC of the cooling module 1 and the vertical longitudinal plane VP coincides with the lateral centre LC of the cooling module 1. This is because the lateral longitudinal plane LP is illustrated as a lateral longitudinal centre plane of the cooling module 1 and the vertical longitudinal plane VP is illustrated as a vertical longitudinal centre plane of the cooling module 1.

As is best seen in Fig. 4, according to the illustrated embodiments, the first and second mounting arrangements 11, 12 are arranged above the vertical centre VC of the cooling module 1. Moreover, the third mounting arrangement 13 is arranged below the vertical centre VC of the cooling module 1. Thereby, the heat exchanger 5 can be held relative to the vehicle 2 in an efficient and secure manner while using few mounting arrangements 11, 12, 13 for attaching the vehicle cooling module 1 to the vehicle 2. This is because movement of the vehicle cooling module 1 relative to the vehicle 2 can be counteracted in all spatial directions in an efficient manner by the three mounting arrangements 11, 12, 13, as is further explained herein.

Furthermore, according to the illustrated embodiments, the third mounting arrangement 13 is arranged at the lateral centre LC of the cooling module 1. The feature that the third mounting arrangement 13 is arranged at the lateral centre LC of the cooling module 1 may encompass that a vertical longitudinal centre plane VP of the cooling module 1 extends through at least a portion of the third mounting arrangement 13. As an alternative, or in addition, the feature that the third mounting arrangement 13 is arranged at the lateral centre LC of the cooling module 1 may encompass that the third mounting arrangement 13 is arranged at a distance from the lateral centre LC being less than 7 centimetres.

Since the third mounting arrangement 13 is arranged at the lateral centre LC of the cooling module 1, the heat exchanger 5 can be held relative to the vehicle 2 in an efficient and secure manner while using few mounting arrangements 11, 12, 13 for attaching the vehicle cooling module 1 to the vehicle 2. This is because movement of the vehicle cooling module 1 relative to the vehicle 2 can be counteracted in all spatial directions in an efficient manner by the three mounting arrangements 11, 12, 13.

Moreover, according to the illustrated embodiments, the three mounting arrangements 11, 12, 13 are positioned such that a centre of mass CG of the cooling module 1 is located between the three mounting arrangements 11, 12, 13 as seen in a direction perpendicular to the front face F1 of the heat exchanger 5. Also due to these features, the heat exchanger 5 can be held relative to the vehicle 2 in an efficient and secure manner while using few mounting arrangements 11, 12, 13 for attaching the vehicle cooling module 1 to the vehicle 2. This is because movement of the vehicle cooling module 1 relative to the vehicle 2 can be counteracted in all spatial directions in an efficient manner by the three mounting arrangements 11, 12, 13.

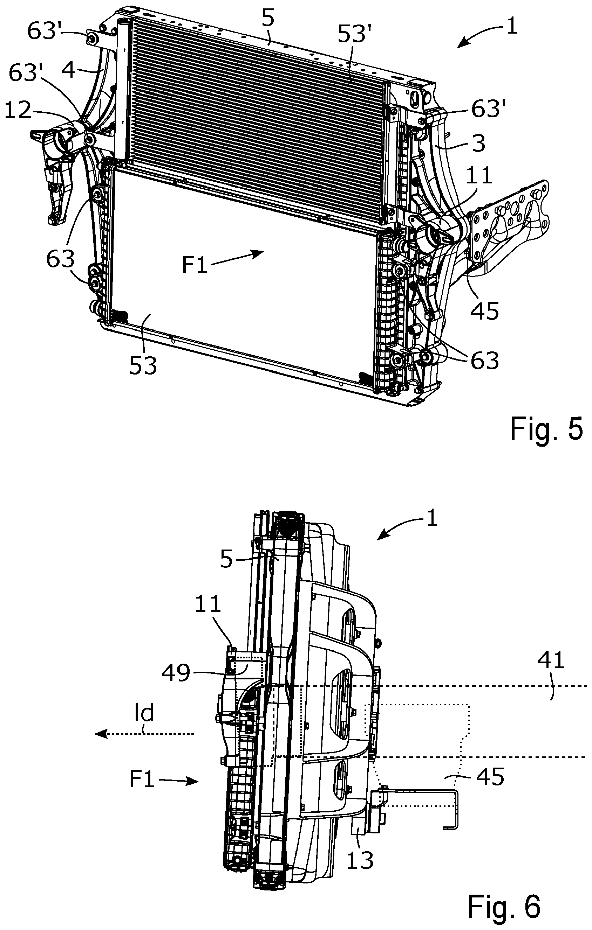

**Fig. 5** illustrates a front view of the cooling module 1 according to the embodiments illustrated in Fig. 2 - Fig. 4. In Fig. 5, the cooling module 1 is illustrated as seen at an angle towards the front face F1 of the heat exchanger 5 of the cooling module 1. Below, simultaneous reference is made to Fig. 1 - Fig. 5, if not indicated otherwise.

In Fig. 5, the second and third heat exchanger 53, 53' can be clearly seen. In the following, the heat exchanger 5, referred to above, is referred to as the "first heat exchanger 5". According to the illustrated embodiments, each of the second and third heat exchanger 53, 53' is arranged in front of the first heat exchanger 5 and has a smaller vertical extension than the first heat exchanger 5.

According to the illustrated embodiments, the second heat exchanger 53 is attached to the first and second side structures 3, 4 using a number of fastening elements 63. Likewise, according to the illustrated embodiments, the third heat exchanger 53' is attached to the first and second side structures 3, 4 using a number of fastening elements 63'.

According to the illustrated embodiments, each of the second and third heat exchanger 53, 53' covers a respective portion of the front face F1 of the first heat exchanger 5. However, each of the second and third heat exchanger 53, 53' comprises a number of openings allowing airflow therethrough. Moreover, each of the second and third heat exchanger 53, 53' may be configured to operate at a lower temperature than the first heat exchanger 5. In this manner, a sufficient airflow to, and cooling of, the first heat exchanger 5 can be ensured.

**Fig. 6** illustrates a side view of the cooling module 1 according to the embodiments illustrated in Fig. 1 - Fig. 5. Moreover, in Fig. 6, the one of the two main frame beams 41 is schematically illustrated in dashed lines. Furthermore, a subframe 49 and the cross member 45 are schematically illustrated in dotted lines. The subframe 49 is mounted to the two main frame beams 41. Moreover, as mentioned above, the cross member 45 is mounted to the two main frame beams 41.

Below, simultaneous reference is made to Fig. 1 - Fig. 6, if not indicated otherwise. According to the illustrated embodiments, the each of the first and second mounting arrangements 11, 12 is mounted to the subframe 49 of the vehicle 2. Moreover, according to the illustrated embodiments, the third mounting arrangement 13 of the cooling module 1 is mounted to the cross member 45.

Some relative movement and turning may occur between the two main frame beams 41 during travel of the vehicle 2 comprising the cooling module 1. However, due to the features of the cooling module 1 and the attachment thereof to the vehicle 2, such relative movement and turning between the two main frame beams 41 is only transferred to the cooling module 1 to some extent and in a manner causing low tension forces being applied to the cooling module 1. This is due to the facts that each of the first and second mounting arrangements 11, 12 is mounted to the subframe 49, the third mounting arrangement 13 of the cooling module 1 is mounted to the cross member 45, the first and second mounting arrangements 11, 12 are arranged above the vertical centre VC of the cooling module 1, the third mounting arrangement 13 is arranged below the vertical centre VC of the cooling module 1, and the fact that the third mounting arrangement 13 is arranged at the lateral centre LC of the cooling module 1.

According to the illustrated embodiments, the cooling module 1 comprises three mounting arrangements 11, 12, 13 only for mounting the cooling module 1 to the vehicle 2. However, according to further embodiments, the cooling module 1 may comprise one or more further mounting arrangements and still obtain at least some of the advantages of the cooling module 1 according to the illustrated embodiments. As an example, the third mounting arrangement 13 may be formed as two adjacent and centrally arranged mounting arrangements. Also in such cases, the cooling module 1 may be quick and simple to assemble and may cause low tension forces to be transferred to the cooling module 1. Likewise, one or both of the first and second mounting arrangements 11, 12 may be formed as two adjacent mounting arrangements. Also in such cases, the cooling module 1 may be quick and simple to assemble and may cause low tension forces to be transferred to the cooling module 1.

Each of the three mounting arrangements 11, 12, 13 form an attachment section of the cooling module 1, wherein the cooling module 1 is suspended relative to the vehicle 2 via the three mounting arrangements 11, 12, 13. The three mounting arrangements 11, 12, 13 may each also be referred to as a suspension arrangement or an attachment arrangement. Moreover, each of the first and second mounting arrangements 11, 12 may be mounted to the subframe 49 using a respective fastener, such as a bolt. Likewise, the third mounting arrangement 13 may be attached to the cross beam 45 using a fastener, such as a bolt. Since the fan assembly 7 is arranged at the rear face F2 of the heat exchanger 5 and the third mounting arrangement 13 is arranged on the fan assembly 7 according to the illustrated embodiments, the third mounting arrangement 13 is arranged at the rear face F2 of the heat exchanger 5 according to the illustrated embodiments.

Also in Fig. 6, the longitudinal direction Id of the vehicle 2 is indicated. As seen in Fig. 6, according to the illustrated embodiments, the cooling module 1 is mounted to the vehicle 2 such that the facing direction of the front face F1 of the heat exchanger 5 obtains a slight inclination relative to the longitudinal direction Id of the vehicle 2.

The wording "substantially parallel to", as used herein, may encompass that the angle between the objects referred to is less than 10 degrees, or is less than 7 degrees.

The wording "substantially perpendicular to", as used herein, may encompass that the angle between the objects referred to is within the range of 80 - 100 degrees or is within the range of 83 - 97 degrees.

The wording "substantially corresponds to", as used herein, may encompass that the aspects, objects, distances, or measurements referred to deviates less than 10% from each other.

The wording "substantially coinciding with", as used herein, may encompass that the angle between the objects referred to is less than 10 degrees, or is less than 7 degrees.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A vehicle cooling module (1) configured to cool a fluid of a cooling system (20) of a vehicle (2), wherein the cooling module (1) comprises:
- a first side structure (3),
- a second side structure (4),
- a heat exchanger (5) attached to the first and second side structures (3, 4),
- a fan assembly (7) comprising at least one fan unit (8') and a fan bracket (10) attaching the at least one fan unit (8') to the first and second side structures (3, 4), and
- three mounting arrangements (11, 12, 13) for mounting the cooling module (1) to the vehicle (2),
and wherein the three mounting arrangements (11, 12, 13) comprise:
- a first mounting arrangement (11) arranged on the first side structure (3),
- a second mounting arrangement (12) arranged on the second side structure (4), and
- a third mounting arrangement (13) arranged on the fan assembly (7).

2. The cooling module (1) according to claim 1, wherein the heat exchanger (5) comprises a front face (F1) configured to be subjected to an airflow flowing towards the front face (F1) during operation of the cooling module (1) and a rear face (F2) being opposite to the front face (F1), and wherein the fan assembly (7) is arranged at the rear face (F2) of the heat exchanger (5).

3. The cooling module (1) according to claim 1 or 2, wherein the fan bracket (10) comprises a number of apertures (15) allowing an airflow therethrough.

4. The cooling module (1) according to any one of the preceding claims, wherein the third mounting arrangement (13) is arranged on the fan bracket (10).

5. The cooling module (1) according to any one of the preceding claims, wherein each fan unit (8') of the fan assembly (7) comprises a fan (8), and wherein the fan assembly (7) comprises a fan shroud (9) enclosing at least a portion of a circumference of each fan (8) of the fan assembly (7).

6. The cooling module (1) according to any one of the preceding claims, wherein each fan unit (8') of the fan assembly (7) comprises a fan (8) and a fan motor (18) configured to rotate the fan (8).

7. The cooling module (1) according to any one of the preceding claims, wherein a vertical extension (v3, v4) of each of the first and second side structures (3, 4) is at least 50%, or is at least 70%, of a vertical extension (v5) of the heat exchanger (5).

8. The cooling module (1) according to any one of the preceding claims, wherein the fan bracket (10) comprises a first mounting portion (19) mounted to the first side structure (3) and a second mounting portion (19') mounted to the second side structure (4), and wherein a vertical extension (v19, v19') of each of the first and second mounting portions (19, 19') is at least 35%, or is at least 50%, of a vertical extension (v5) of the heat exchanger (5).

9. The cooling module (1) according to any one of the preceding claims, wherein the first and second mounting arrangements (11, 12) are arranged above a vertical centre (VC) of the cooling module (1).

10. The cooling module (1) according to any one of the preceding claims, wherein the third mounting arrangement (13) is arranged below a vertical centre (VC) of the cooling module (1).

11. The cooling module (1) according to any one of the preceding claims, wherein the third mounting arrangement (13) is arranged at a lateral centre (LC) of the cooling module (1).

12. The cooling module (1) according to any one of the preceding claims, wherein the heat exchanger (5) comprises a front face (F1) configured to be subjected to an airflow during operation of the cooling module (1), and wherein the three mounting arrangements (11, 12, 13) are positioned such that a centre of mass (CG) of the cooling module (1) is located between the three mounting arrangements (11, 12, 13) as seen in a direction perpendicular to the front face (F1) of the heat exchanger (5).

13. A vehicle (2) comprising a cooling system (20) and a cooling module (1) according to any one of the preceding claims, wherein the cooling module (1) is configured to cool a fluid of the cooling system (20) of the vehicle (2).

14. The vehicle (2) according to claim 13, wherein the vehicle (2) comprises two main frame beams (41) and a cross member (45) connecting the two main frame beams (41), and wherein the third mounting arrangement (13) of the cooling module (1) is mounted to the cross member (45).

15. The vehicle (2) according to claim 13 or 14, wherein the vehicle (2) comprises two main frame beams (41) and a subframe (49) mounted to the two main frame beams (41), and wherein each of the first and second mounting arrangements (11, 12) is mounted to the subframe (49).

## Patentansprüche

1. Fahrzeugkühlungsmodul (1), das zum Kühlen eines Fluids eines Kühlungssystems (20) eines Fahrzeugs (2) eingerichtet ist, wobei das Kühlungsmodul (1) umfasst:
- eine erste Seitenstruktur (3),
- eine zweite Seitenstruktur (4),
- einen Wärmetauscher (5), der an der ersten und zweiten Seitenstruktur (3, 4) angebracht ist,
- eine Lüfteranordnung (7) mit wenigstens einer Lüftereinheit (8') und einer Lüfterhalterung (10), die die wenigstens eine Lüftereinheit (8') an der ersten und der zweiten Seitenstruktur (3, 4) anbringt, und
- drei Montageanordnungen (11, 12, 13) zur Montage des Kühlungsmoduls (1) an dem Fahrzeug (2),
und wobei die drei Montageanordnungen (11, 12, 13) umfassen:
- eine erste Montageanordnung (11), die an der ersten Seitenstruktur (3) angeordnet ist,
- eine zweite Montageanordnung (12), die an der zweiten Seitenstruktur (4) angeordnet ist, und
- eine dritte Montageanordnung (13), die an der Lüfteranordnung (7) angeordnet ist.

2. Kühlungsmodul (1) nach Anspruch 1, wobei der Wärmetauscher (5) eine Vorderseite (F1), die dazu eingerichtet ist, während des Betriebs des Kühlungsmoduls (1) einem zur Vorderseite (F1) strömenden Luftstrom ausgesetzt zu sein, und eine der Vorderseite (F1) gegenüberliegende Rückseite (F2) aufweist, und wobei die Lüfteranordnung (7) an der Rückseite (F2) des Wärmetauschers (5) angeordnet ist.

3. Kühlungsmodul (1) nach Anspruch 1 oder 2, wobei die Lüfterhalterung (10) eine Anzahl von Öffnungen (15) aufweist, durch die Luft strömen kann.

4. Kühlungsmodul (1) nach einem der vorangehenden Ansprüche, wobei die dritte Montageanordnung (13) an der Lüfterhalterung (10) angeordnet ist.

5. Kühlungsmodul (1) nach einem der vorangehenden Ansprüche, wobei jede Lüftereinheit (8') der Lüfteranordnung (7) einen Lüfter (8) umfasst und wobei die Lüfteranordnung (7) eine Lüfterverkleidung (9) umfasst, die wenigstens einen Teil eines Umfangs eines jeden Lüfters (8) der Lüfteranordnung (7) umschließt.

6. Kühlungsmodul (1) nach einem der vorangehenden Ansprüche, wobei jede Lüftereinheit (8') der Lüfteranordnung (7) einen Lüfter (8) und einen Lüftermotor (18) umfasst, der zum Drehen des Lüfters (8) eingerichtet ist.

7. Kühlungsmodul (1) nach einem der vorangehenden Ansprüche, wobei eine vertikale Ausdehnung (v3, v4) der ersten und der zweiten Seitenstruktur (3, 4) jeweils wenigstens 50 % oder wenigstens 70 % einer vertikalen Ausdehung (v5) des Wärmetauschers (5) beträgt.

8. Kühlungsmodul (1) nach einem der vorangehenden Ansprüche, wobei die Lüfterhalterung (10) einen an der ersten Seitenstruktur (3) montierten ersten Montageabschnitt (19) und einen an der zweiten Seitenstruktur (4) montierten zweiten Montageabschnitt (19') umfasst und wobei eine vertikale Ausdehnung (v19, v19') des ersten und des zweiten Montageabschnitts (19, 19') jeweils wenigstens 35 % oder wenigstens 50 % einer vertikalen Ausdehung (v5) des Wärmetauschers (5) beträgt.

9. Kühlungsmodul (1) nach einem der vorangehenden Ansprüche, wobei die erste und die zweite Montageanordnung (11, 12) oberhalb einer vertikalen Mitte (VC) des Kühlungsmoduls (1) angeordnet sind.

10. Kühlungsmodul (1) nach einem der vorangehenden Ansprüche, wobei die dritte Montageanordnung (13) unterhalb einer vertikalen Mitte (VC) des Kühlungsmoduls (1) angeordnet ist.

11. Kühlungsmodul (1) nach einem der vorangehenden Ansprüche, wobei die dritte Montageanordnung (13) an einer seitlichen Mitte (LC) des Kühlungsmoduls (1) angeordnet ist.

12. Kühlungsmodul (1) nach einem der vorangehenden Ansprüche, wobei der Wärmetauscher (5) eine Vorderseite (F1) aufweist, die dazu eingerichtet ist, während des Betriebs des Kühlungsmoduls (1) einem Luftstrom ausgesetzt zu sein, und wobei die drei Montageanordnungen (11, 12, 13) derart positioniert sind, dass sich bei Betrachtung in einer Richtung senkrecht zu der Vorderseite (F1) des Wärmetauschers (5) ein Massenschwerpunkt (CG) des Kühlungsmoduls (1) zwischen den drei Montageanordnungen (11, 12, 13) befindet.

13. Fahrzeug (2) mit einem Kühlungssystem (20) und einem Kühlungsmodul (1) nach einem der vorangehenden Ansprüche, wobei das Kühlungsmodul (1) dazu eingerichtet ist, ein Fluid des Kühlungssystems (20) des Fahrzeugs (2) zu kühlen.

14. Fahrzeug (2) nach Anspruch 13, wobei das Fahrzeug (2) zwei Hauptrahmenträger (41) und einen die beiden Hauptrahmenträger (41) verbindenden Querträger (45) umfasst und wobei die dritte Montageanordnung (13) des Kühlungsmoduls (1) an dem Querträger (45) montiert ist.

15. Fahrzeug (2) nach Anspruch 13 oder 14, wobei das Fahrzeug (2) zwei Hauptrahmenträger (41) und einen an den beiden Hauptrahmenträgern (41) montierten Hilfsrahmen (49) umfasst und wobei die erste und die zweite Montageanordnung (11, 12) jeweils an dem Hilfsrahmen (49) montiert ist.

## Revendications

1. Module de refroidissement de véhicule (1) configuré pour refroidir un fluide d'un système de refroidissement (20) d'un véhicule (2), dans lequel le module de refroidissement (1) comprend :
- une première structure latérale (3),
- une deuxième structure latérale (4),
- un échangeur de chaleur (5) fixé aux première et deuxième structures latérales (3, 4),
- un ensemble ventilateur (7) comprenant au moins une unité de ventilateur (8') et un support de ventilateur (10) fixant l'au moins une unité de ventilateur (8') aux première et deuxième structures latérales (3, 4), et
- trois agencements de montage (11, 12, 13) pour monter le module de refroidissement (1) sur le véhicule (2),
et dans lequel les trois agencements de montage (11, 12, 13) comprennent :
- un premier agencement de montage (11) agencé sur la première structure latérale (3),
- un deuxième agencement de montage (12) agencé sur la deuxième structure latérale (4), et
- un troisième agencement de montage (13) agencé sur l'ensemble ventilateur (7).

2. Module de refroidissement (1) selon la revendication 1, dans lequel l'échangeur de chaleur (5) comprend une face avant (F1) configurée pour être soumise à un écoulement d'air s'écoulant vers la face avant (F1) pendant le fonctionnement du module de refroidissement (1) et une face arrière (F2) qui est opposée à la face avant (F1), et dans lequel l'ensemble ventilateur (7) est agencé au niveau de la face arrière (F2) de l'échangeur de chaleur (5) .

3. Module de refroidissement (1) selon la revendication 1 ou 2, dans lequel le support de ventilateur (10) comprend un certain nombre d'ouvertures (15) permettant un écoulement d'air à travers celles-ci.

4. Module de refroidissement (1) selon l'une quelconque des revendications précédentes, dans lequel le troisième agencement de montage (13) est agencé sur le support de ventilateur (10).

5. Module de refroidissement (1) selon l'une quelconque des revendications précédentes, dans lequel chaque unité de ventilateur (8') de l'ensemble ventilateur (7) comprend un ventilateur (8), et dans lequel l'ensemble ventilateur (7) comprend un carénage de ventilateur (9) enfermant au moins une portion d'une circonférence de chaque ventilateur (8) de l'ensemble ventilateur (7).

6. Module de refroidissement (1) selon l'une quelconque des revendications précédentes, dans lequel chaque unité de ventilateur (8') de l'ensemble ventilateur (7) comprend un ventilateur (8) et un moteur de ventilateur (18) configuré pour faire tourner le ventilateur (8).

7. Module de refroidissement (1) selon l'une quelconque des revendications précédentes, dans lequel une extension verticale (v3, v4) de chacune des première et deuxième structures latérales (3, 4) est d'au moins 50 %, ou est d'au moins 70 %, d'une extension verticale (v5) de l'échangeur de chaleur (5).

8. Module de refroidissement (1) selon l'une quelconque des revendications précédentes, dans lequel le support de ventilateur (10) comprend une première portion de montage (19) montée sur la première structure latérale (3) et une deuxième portion de montage (19') montée sur la deuxième structure latérale (4), et dans lequel une extension verticale (v19, v19') de chacune des première et deuxième portions de montage (19, 19') est d'au moins 35 %, ou est d'au moins 50 %, d'une extension verticale (vr5) de l'échangeur de chaleur (5).

9. Module de refroidissement (1) selon l'une quelconque des revendications précédentes, dans lequel les premier et deuxième agencements de montage (11, 12) sont agencés au-dessus d'un centre vertical (VC) du module de refroidissement (1) .

10. Module de refroidissement (1) selon l'une quelconque des revendications précédentes, dans lequel le troisième agencement de montage (13) est agencé au-dessous d'un centre vertical (VC) du module de refroidissement (1).

11. Module de refroidissement (1) selon l'une quelconque des revendications précédentes, dans lequel le troisième agencement de montage (13) est agencé au niveau d'un centre latéral (LC) du module de refroidissement (1).

12. Module de refroidissement (1) selon l'une quelconque des revendications précédentes, dans lequel l'échangeur de chaleur (5) comprend une face avant (F1) configurée pour être soumise à un écoulement d'air pendant le fonctionnement du module de refroidissement (1), et dans lequel les trois agencements de montage (11, 12, 13) sont positionnés de telle sorte qu'un centre de masse (CG) du module de refroidissement (1) est situé entre les trois agencements de montage (11, 12, 13) comme vu dans une direction perpendiculaire à l'échangeur de face avant (F1) de l'échangeur de chaleur (5).

13. Véhicule (2) comprenant un système de refroidissement (20) et un module de refroidissement (1) selon l'une quelconque des revendications précédentes, dans lequel le module de refroidissement (1) est configuré pour refroidir un fluide du système de refroidissement (20) du véhicule (2).

14. Véhicule (2) selon la revendication 13, dans lequel le véhicule (2) comprend deux poutres de châssis principal (41) et une membrure transversale (45) reliant les deux poutres de châssis principal (41), et dans lequel le troisième agencement de montage (13) du module de refroidissement (1) est monté sur la membrure transversale (45).

15. Véhicule (2) selon la revendication 13 ou 14, dans lequel le véhicule (2) comprend deux poutres de châssis principal (41) et un châssis secondaire (49) monté sur les deux poutres de châssis principal (41), et dans lequel chacun des premier et deuxième agencements de montage (11, 12) est monté sur le châssis secondaire (49).
